# EUROPEAN PATENT APPLICATION

(11) **EP 2 896 299 A1**
(43) Date of publication of application: **22.07.2015**
(21) Application number: 14425004.0
(22) Date of filing: 20.01.2014
(51) Int. Cl.: A23K 1/16, A23K 1/165, A23K 1/18

(54) **Formula for semisolid, semiliquid or solid nutriment especially designed for the nourishment of honey bees and all other animal species with the exclusion of human beings**

(71) Applicant: Stracci, Giuliano, 57017 Collesalvetti, Livorno (IT); Testa, Marco, 00146 Roma (IT); Testa, Maurizio, 42123 Reggio Emilia (IT)
(72) Inventor: Stracci, Guiliano, 57017 Collesalvetti Livorno (IT)

(57) **Abstract**

The new formula, of which an application has been submitted for exclusive protection by means of a patent, is a mixture of sugar sucrose and invertase, with or without the addition of water, in which the 3 elements may be added in variable proportions, remaining, however, within an established threshold. This formula has been created for the purpose of providing usable nutrition for honey bees and other animal species, since it is transformed over time, partially and gradually, into glucose and fructose.

The innovative aspect of this foodstuff formula is the use of invertase enzyme for obtaining nutritious sugar compounds for bee- and insect-keeping and the breeding of animals (with the exception of human beings).

The formula composed of sucrose with invertase, with or without water, has been tested to improve the biological activity of honey bees, other species of insect and animals of other families, thanks to its high nutritional potential, usability and appetizing properties. It can also be used as carrier for other nutrients or nutritional components or to incorporate active principles for health purposes or for the biological stimulation of various animal species, which may take advantage of the consumption of sugar, or also to stimulate reproduction, used 'as is' or as a carrier for other nutrients or components or active principles .

This formula can also be used to help honey bees overcome difficult periods caused by adverse environmental or climatic conditions.

## Description

The innovative element, which has lead us to submit our application for registration, is the testing, within certain percentages, of the invertase enzyme so that it may be used for the preparation of solid, semisolid or semiliquid (sucrose-based) formulas that will be in turn used to prepare foodstuffs for honey bees or other insects and animals (with the exception of human beings). This category of product is known as "bee candy", such as sugary dough-like compounds. As far as the formula composed of sugar and invertase is concerned - with or without water - the percentage of sugar sucrose may vary from a maximum of 99.9% of the total weight to a minimum of 78%; invertase may vary from a minimum of 1 (one) unit to a maximum of 100,000 (one hundred thousand) units per kg of sugar employed, considering each single unit as the quantity of invertase enzyme needed to form 1 mg of inverted sugar syrup out of 6 ml of 5.4% sucrose solution in standard conditions (ph 4.5 - 20°C Temperature - in 5 minutes). The water content of the formula may vary from a minimum of 0% to a maximum of 21.9999%.

Taking into account the maximum and minimum thresholds established for each of the 3 components, the percentage of these ingredients may vary, within an established parameter range, so that the formula may be changed from a solid to a semisolid dough-like or semiliquid consistency. For instance, a semiliquid consistency can be obtained by increasing the percentage of water to its maximum level and adding a minimum of invertase and sucrose, whilst remaining, however, within the above mentioned parameters. The same effect can be obtained by reducing the percentage of water and increasing the percentage of sucrose and, above all, invertase.

The use of the invertase enzyme, mixed with sucrose and water in variable percentages, as described above, has resulted in the creation of a compound that, in an unexpected and surprising manner, has organoleptic and physical-chemical properties that are particularly interesting and useful for beekeeping, breeding of other insects, animal species (with the exclusion of human beings) and families of animals. The new formula has proved to be particularly appreciated. It has also proved to be useful from a technological point of view, by virtue of the usability and appetizing properties that are a result of the enzymatic action. The same formula can be used to encourage the ingestion of components that do not strictly relate to nourishment but that are useful, such as, for instance, medicine or active principles of different kinds. This formula can offer dietary and biological advantages and may be used to give life to effective health, prevention The surprising usability of this formula depends on the characteristics conferred by invertase. The latter interacts chemically with sucrose (disaccharide composed of one glucose and one fructose molecule, which are chemically combined) and gradually divides it into inverted sugar syrup (containing glucose and fructose monosaccharide in free form). Since fructose is cleaved from glucose, under the effect of the enzymatic action of invertase, the resulting moist compound can be preserved over time. It is also consumed as a whole even when the species of animal tends to suck the liquid fraction of ration beforehand (for instance bees that first consume the liquid part of the formula).

Thanks to the hygroscopicity of fructose released by invertase, moisture is maintained within the sugar ration. By nature, fructose tends to absorb humidity from the atmosphere, which prevents the product drying after the pack has been opened.

Experience has demonstrated that with "candy" for bees and animals with formulas created before this one (compounds with sucrose and without invertase), consumption in advance of the liquid fraction of the ration (e.g. bees that suck the liquid fraction) often determines drying of the solid part of the ration, which is therefore not consumed, and a waste of raw materials. In "Candy" of the older generation, which is composed of sucrose with inverted sugar, glucose or fructose syrup, monosaccharide (glucose and fructose) is added and does not form in the mixture, which instead occurs in our formula thanks to the presence of invertase. The lack of invertase is the basic difference between the formula we are presenting, which instead includes invertase, and "candy" of the older generation, which does not contain it.

In this new formula, invertase binds chemically with every micro granule of sucrose, hence partially transforming it into a mixture of glucose and fructose (inverted sugar) that, owing to its physical and chemical properties, is hygroscopic thanks to the presence of fructose in free form. The result is that fructose, released over time by the enzyme, absorbs ambient humidity and moistens the ration to make it more usable and to increase the appetizing properties of the entire compound. In fact, thanks to the chemical binding effect between sucrose and invertase, the enzyme is never totally extracted from the ration under the effect of sucking, which instead occurs for glucose and fructose; therefore, the enzyme continues to react chemically in the ration to produce new inverted sugar (which is hygroscopic and therefore highly usable) until the entire ration has been consumed.

This physical/chemical behaviour cannot be noted in older generation "candy", due to the lack of invertase. Once the liquid fraction has been sucked away, the candy compound tends to dry so that the remaining part of the ration cannot be or is only partially consumed (older generation "candy" compounds, composed of sucrose and monosaccharide syrup, are not patented and have been marketed in the field of products for bees for over 20 years).

The presence of the enzyme in the mixture gradually reduces the percentage of sucrose whereas the inverted sugar percentage increases. In other words, the product continues to transform itself over time, from a chemical point of view, as if it was "alive", thanks the enzymatic action. The physical/chemical behaviour of this formula has an essential difference in terms of usability and appetizing properties if compared to compounds containing sucrose and syrups containing monosaccharide, to which invertase - in established proportions - as indicated in claim 2 - is not added.

Another unexpected ascertainment is that by mixing to this formula (sucrose and invertase) active medicinal principles or microorganisms belonging to the yeast, bacteria or fungi category, animal or vegetable proteins, fructose, glucose, inverted sugar, dietary minerals, essential oils, flavourings and natural flavourings, animal and vegetable fat, pollen, vitamins, antioxidants, maltodextrin, starch from various vegetable species, biostimulants, medicaments or a combination of the above mentioned categories of product, the latter are gradually transferred to the liquid part of the compound and are therefore consumed as a whole (e.g. yeast added to the formula will be consumed very rapidly to allow for fast biostimulation of colonies of honey bees and, as a consequence, a rapid increase in the number of bees useful for the production of honey).

By appropriately changing the percentage of the various ingredients in the patent-pending formula (sucrose and invertase, with or without water), it is possible to obtain products with a softness and ease-of-assimilation that allow for gradual consumption of the ration, even after the pack has been opened and for a very long time since opening (e.g. 18 months).

The formula can be produced in rations with different dimensions and consistency so that they may be used by various species of animal or insect. In fact, by varying the percentage of each raw material, it is possible to obtain solid, semisolid or semiliquid rations. For instance, it can be produced under the form of a snack and therefore used as an easily available carrier matrix for other dietary components, active principles and nutrients.

Furthermore the invertase enzyme helps the metabolism of honey bees and any other animal since it is a digestive enzyme that divides sucrose into glucose and fructose to make them biologically available.

Lastly, we wish to draw attention to the exceptional preservability of the product during storage, which is due to the high percentage of sugar that prevents fermentation.

The product is obtained by means of a simple and repeatable industrial process.

This is an industrial cycle divided into four stages:
- Milling, by means of an industrial mill for milling common sugar sucrose to obtain powder (powdered sugar);
- Mixing (by means of industrial kneading or mixing machines) of powdered sugar with invertase and water, or dry, according to the proportions needed to produce a dough-like mixture with varying density or a semiliquid or solid compound.
   During this stage, it is possible to incorporate and blend into the formula other components (medicinal principles, microorganisms, nutrients, etc.).
- Weighing, namely the creation of doses and subsequent packaging of single rations in sealed and water-tight packs;

The industrial application of the formula is made easier thanks to the great preservability of the product during storage, owing to the high percentage of sugar that prevents fermentation

## Claims

1. A formula of a solid, semi-solid or semi-liquid, containing sucrose sugar refined or crude (integral), with or without the addition of water, with the invertase enzyme, to be used as such for the preparation of a nutritional sugar for feeding bees and every other species, belonging to the categories of mammals (except man), birds, reptiles, amphibians, and insects.

2. A formula, according to claim, wherein 1; the percentage of sucrose sugar can vary by weight from a minimum of 78% to a maximum of 99.9% ; invertase can vary from a minimum of 1 unit, for a maximum of 100,000 (one hundred thousand) units for every Kg of sugar used, whereas each single unit as the amount of invertase enzyme required to form 1 mg of inverted sugar of 6 ml of solution of sucrose to 5.4% under standard conditions (pH 4.5 - 20 ° C temperature - in 5 minutes); the water contained in the mixture may vary from a minimum of 0% to a maximum of 21.9999%; regarded as the maximum and minimum values of each of 3 components, such ingredients may vary in percentage in the formula, so as to enable the preparation of various types of mixtures equipped with variable consistency from the solid to semi-solid or semi-liquid.
